# EUROPEAN PATENT SPECIFICATION

(11) **EP 0 609 370 B1**
(45) Date of publication and mention of the grant of the patent: **27.03.1996**
(21) Application number: 92922906.0
(22) Date of filing: 15.10.1992
(51) Int. Cl.: B01D 53/00

(54) **BIOLOGICAL FILTER**
BIOLOGISCHER FILTER
FILTRE BIOLOGIQUE

(30) Priority: 18.10.1991 DK 1756/91
(43) Date of publication of application: 10.08.1994
(73) Proprietor: Rockwool International A/S, DK-2640 Hedehusene (DK)
(72) Inventor: DALBERG, Preben, Schavitsky, DK-4390 Vipperod (DK); NIELBO, Vagn, Oluf Bandholmvej 6, DK-4000 Roskilde (DK); THOMSEN, Poul, Hojbjerre, DK-2620 Albertslund (DK)
(74) Representative: Kyed, Iver
(86) International application number: DK9200304
(87) International publication number: WO9307952

(56) References cited:
- EP-A- 0 147 721
- EP-A- 0 359 969
- DE-C- 3 423 285
- US-A- 5 051 118
- PATENT ABSTRACTS OF JAPAN, Vol. 13, No. 238, C603; & JP,A,01 047 424, publ 1989-02-21 (THREE N GIJUTSU CONSULTANT K.K.).

## Description

This invention relates to a biological filter for purifying polluted gases comprising a housing containing a fibrous filter unit containing one or more cultures of microorganisms, means for supplying aqueous nutrient medium to the microorganisms contained in the fibrous filter unit, means for supplying polluted gas to one side of the filter unit and means for discharging purified gas from the opposite side thereof.

US patent specification No. 3,216,905 discloses a method of removing obnoxious organic materials from gases by passing a stream of said gas through a duct comprising a layer of a porous mass contained in a gas permeable support housing and placed perpendicular to the flow direction of the gas. The porous mass which may consist of glass wool contains a culture of a microorganism and an aqueous nutrient medium which by capillary action is supplied to the porous mass from a tray-shaped container placed below and in contact with the porous mass. The aqueous medium may also be supplied to the porous mass by being sprayed continuously over the porous mass.

EP patent publication No. 0 147 721 A2 discloses a method of separating noxious organic substances from waste gases by bacterial biological oxidation wherein a gas stream containing traces of the undesired organic substances is passed through one or more biologically active layers of a loose material in the form of activated carbon, zeolite or silica gel having fixed thereon a mono culture or a mixed culture of microorganisms.

The biologically active layers are located in a reactor and a stream of liquid which serves to keep the microorganisms fixed to the surface of the filter unit moist is supplied to the reactor, said liquid being recycled to the filter unit after having passed therethrough.

As mentioned above, the filter unit consists of activated carbon, zeolite, silica gel or mixtures thereof, which apart from being porous should have an inner surface area of from 500 to 1500 m²/g and should be capable of adsorbing the polluting substances.

Filter materials of this type are relatively costly and cause the pressure of the gas flowing through such materials to drop substantially.

According to the invention there is provided a biological filter of the above-mentioned type, said filter being characterized in that the filter unit comprises an assembly of mineral fiber slabs supporting the culture(s) of microorganisms and mounted in a zig-zag configuration, said filter unit extending substantially perpendicular to the flow direction of the gas to be purified.

The mounting of the mineral fiber slabs in the manner described above is advantageous partly because it reduces the volume of the filter unit or in other words increases the ratio of filter area to volume and partly because it enables the filter slabs to be easily removed and replaced with new slabs when the gas filtering capacity is reduced to an unacceptable level, e.g. because the porosity of the slabs is lost, if they dry out or if holes are formed therein.

Moreover, the filter of the invention is highly advantageous since the pressure drop (difference pressure) across the filter is very low and the mineral fibre slabs have a structure which, in the practical use of the invention, usually will not be blocked by e.g. polluting material, biomass, dust or pieces of material carried along with the polluting gas.

Another advantage is that it is possible to control the filtering process by monitoring the concentration of nutrients and/or mineral salts and/or contaminants in the aqueous nutrient medium.

Furthermore, filter elements in the form of mineral fiber slabs are relatively inexpensive and they have a large inner surface which permits a biofilm having a correspondingly large surface area to be formed thereon.

In a preferred embodiment of the gas filter of the invention the filter unit is placed in a horizontal plane so that the gas to be purified passes substantially vertically through the filter unit.

Such mounting is advantageous because it permits the aqueous nutrient medium to be uniformly distributed over the filter slabs.

It is preferred that the means for supplying aqueous nutrient medium and the means for supplying polluted gas to the filter unit are placed on the same side of the filter unit so as to allow the polluted gas to flow co-currently with the aqueous medium. Such a co-current flow results in high absorption of the contaminants from the polluted gas in the aqueous medium.

When the polluted gas is treated in the above-mentioned manner the aqueous nutrient medium is preferably supplied to the upper part of the gas filter housing and is caused to flow down over the filter unit under the influence of gravity.

In another preferred embodiment of the invention the means for supplying aqueous medium and the means for supplying polluted gas to the filter unit are placed on opposite sides of the filter unit.

This embodiment permits the polluted gas to be treated with the aqueous nutrient medium in a countercurrent flow. Such a treatment causes the amount of aqueous medium carried away with the purified gas to be relatively small.

The mineral fiber slabs are preferably connected to one another, e.g. by glueing or mechanically, in the zones in which they are in contact. However, whether the mineral fiber slabs are mounted loosely or are connected to one another it may be advantageous to provide guide members for maintaining the lower edges of the mineral fiber slabs in a fixed position.

Such guide members also facilitate the replacement of used slabs with new ones.

The aqueous nutrient medium should preferably be distributed uniformly over the surfaces of the mineral fiber slabs and to that end it may be desirable to provide a liquid distribution fiber layer, such as a layer of a fibrous material on the top edges of the adjoining filter slabs.

Such a fibrous layer, e.g. a non-woven cotton layer, also presents the advantage that it prevents holes from being formed in the mineral fiber slabs within the zones in which they are continuously subjected to the influence of streams of nutrient medium.

The means for supplying aqueous nutrient medium to the filter unit may be in the form of pipes which are closed at their ends and which are provided with a plurality of holes.

The holes may be placed on the upper side of these pipes and the diameter of the holes may be such that small sprays are formed on the top of said pipes.

The aqueous medium may also be supplied to the mineral fiber slabs in the form of drops or fine sprays generated in a large number of small orifices in the walls of one or more pipes.

It should be understood that the aqueous nutrient medium may be supplied to the filter unit by use of any suitable distribution means and that the above-mentioned means are only to be considered as examples.

The mineral fiber slabs preferably consist of rock wool, glass wool or slag wool, and the density is preferably between 25 and 180 kg/m³, more preferably between 25 and 120 kg/m³, and most preferably between 35 and 80 kg/m³.

The angle between adjacent mineral fiber slabs may vary within a broad range, e.g. between 1° and 30°, and is preferably between 3° and 10°.

The dimensions of the individual mineral fiber slabs are not critical, but in practice it is preferred to use slabs having a thickness of from 1.5 to 15 cm and a width and a length each of from 30 to 200 cm.

It is preferred to use slabs having such dimensions that they can be handled without problems when installed or in case of replacement of slabs.

Depending on the total filter area used each filter element may be composed of more than one slab.

The mineral fiber slabs are preferably rock wool slabs of the type which is manufactured by Rockwool A/S, DK-2640 Hedehusene, Denmark, and which contain small amounts of a binder, such as a phenol formaldehyde resin.

The individual slabs of the filter unit may be replaced without demounting the filter. Replacement of slabs may be required e.g. in case of drying out or chemical degradation of the binder present in the slab to make it dimensionally stable. For example it may be appropriate to perform preventive maintenance by replacing the slabs after every six months of operation.

Cultures of microorganisms suitable for use in the gas filter of the invention can be obtained in various ways, e.g. by isolation from activated sludge, contaminated soils and forest floor, but it is preferred to use a microorganism culture obtained from a pure culture.

Examples of suitable microorganisms are Nitrosomonas, Pseudomonas, Trichosporum, Nocardia, Thiobacillus, and Bacillus.

The cultures used may be either monocultures or mixed cultures.

It has been found that the mineral fiber material is capable of capturing most of the exfoliated cell mass resulting from the metabolism/biological degradation of contaminants contained in the polluted gas, and that the porous fibrous material has a sufficient porosity to accumulate the exfoliated cell mass during the total mechanical life time of the mineral fiber slabs.

Alternatively, it is assumed that the mineral fiber slabs may accomodate other biological species, e.g. fungi, algae, protozoans and nematodes, which are capable of utilizing the exfoliated cell mass in their metabolism.

A particularly preferred embodiment of the biological filter of the invention comprises means for collecting aqueous nutrient medium at the bottom of the housing and means for recycling the collected aqueous nutrient medium to the filter unit.

Such a biological filter is particularly suitable for purifying polluted gas which is supplied to the filter intermittently because it can tolerate loads which exceed the instantaneous degradation capacity of the biomass without any substantial reduction of the purification capacity of the filter.

It has been found that by using this embodiment and by supplying aqueous nutrient medium in amounts which are excessive compared to the amount required for wetting the biomass the purification taking place in periods in which the filter is loaded is mainly based on absorption of the contaminating substances in the aqueous nutrient medium, which is evidenced by the fact that the concentration of the contaminating substances in the aqueous nutrient medium gradually increases during such periods.

However, when in operation the normal situation is that the load on the filter is relatively low, i.e. the amount of contaminants contained in the polluted gas is small compared to the purification capacity of the filter. In this state it appears that the purification is based on an immediate biological degradation of the contaminants rather than on an initial absorption in the nutrient medium and a subsequent biological degradation.

Nevertheless, as mentioned above it is advantageous that the filter of the invention can cope with an "emergency" situation such as a sudden, significant increase in the load on the filter. When this situation occurs, i.e. when the aqueous nutrient medium acts as an absorption medium for the contaminants, it is necessary to provide monitoring of certain process parameters, especially the concentration of the contaminants in the aqueous nutrient medium. If such process parameters are monitored, prohibition of the activity of the biomass or even possible total destruction of the biomass may be avoided, e.g. by the addition of fresh cultures of microorganisms to the filter and/or by substituting the aqueous nutrient medium having a high concentration of contaminants with fresh aqueous nutrient medium (water) and/or by reducing the incoming load on the filter.

In another embodiment of the invention, the filter may be supplied with fresh aqueous nutrient medium which is discharged from the filter system without recycling. This will result in a higher water consumption than in case of a recycling system but, on the other hand, aqueous nutrient medium collecting tank(s) and pH adjusting system(s) may be rendered superfluous.

When the supply of polluted gas stops, e.g. because the gas producing plant is operated only in periods, such as during the daytime or because there is switched over to another gas purification plant, and the recycling of aqueous nutrient medium is maintained during the period in which no polluted gas is supplied to the filter, the concentration of contaminating substances in the aqueous nutrient medium gradually decreases because the biomass continues to convert the contaminating substances.

It is obvious that the filter unit has to be carefully and individually designed for each application. Parameters, such as the desired degree of purification of the gas, the average and/or maximum load of the filter with polluting compound(s) which is/are to be removed from the gas, the gas flow rate, and the actual space which is available for the gas filter, should be taken into consideration in the design process.

However, in the practical operation of the gas filter according to the invention it is preferred that the gas flow rate through the filter unit does not exceed approximately 0.1 m/sec. Thus the highest efficiency is obtained when the gas flow rate is kept at the lowest possible level. Usually, the filter of the invention will be operated with a gas flow rate of 0.04-0.06 m/sec.

It may be advantageous to use mineral filter slabs which contain a suitable amount of activated carbon or charcoal. This is especially the case when the polluted gas comprises undesired organic solvents (i.e. organic compounds which are essentially non-soluble in water) which can be adsorbed on the activated carbon.

Instead of using a single filter it is ordinarily preferable to use two or more filters and to treat the polluted gas in series or in parallel.

The aqueous nutrient medium leaving the filter or filters is preferably passed to a collecting tank and fresh water may optionally be introduced into said tank to compensate for water which is evaporated or removed together with the purified gas.

Alternatively, or combined with the mentioned addition of the water, the addition of fresh water may also take place by conditioning the polluted gas before it enters the filter. By doing this the polluted gas may also be cooled to a desired temperature before entering the filter.

It is preferred that droplets of water are not carried away with the filtered gas. When the gas filter according to the invention is operated in countercurrent flow, this may be avoided, e.g. by adapting the gas flow rate to the actual filter size and design or by using a mist collector or eliminator which is to be placed after the filter unit.

When the temperature of the gas to be filtered is relatively high it may be advantageous to operate the gas filter in co-current flow since the aqueous nutrient medium will contribute considerably to lower the gas temperature.

It is preferred to supply the required supplementary nutrients for the biomass to the collecting tank which also may be provided with means for heating the aqueous medium before it is recycled to the gas filter.

Furthermore, it is advantageous to control the biological degradation process by monitoring the concentration of e.g. mineral salts in the aqueous nutrient medium collecting tank or in the aqueous nutrient medium outlet from the filter unit, e.g. by measuring the electrical conductivity (EC) of the medium, the content of halides, sulphate ions, nitrate ions, nitrite ions, ammonium ions, phosphate ion, and similar ions, and/or of contaminants, and by controlling the process, e.g. by adding fresh water to the aqueous nutrient medium (dilution) or discharging aqueous nutrient medium from the filter system, either to collecting tanks for later use in the filter system or to the sewerage, or by precipitating the mineral salts and/or contaminants.

A particularly high purification efficiency is obtainable by operating the filter unit at a temperature e.g. within the range of 20-40°C, depending upon the microorganisms used, e.g. by heating the aqueous nutrient medium or by cooling the polluted gas.

Acid or base may be supplied to the collecting tank to adjust the pH at a value which is optimum for the microorganisms used.

The filter of the invention is particularly suitable for purifying gases containing organic compounds.

Examples of such organic compounds are aliphatic compounds, such as hydrocarbons, aldehydes, ketones, volatile carboxylic acids and aromatic compounds, such as phenols, which all may act as carbon sources for the microorganisms.

The filter is also suitable for removing nitrogeneous compounds, such as ammonia and triethylamine, or sulfur-containing compounds, such as hydrogen sulfide, sulfur dioxide and mercaptanes.

The filter is also suitable for the purification of waste gases from mineral fiber production plants. Such gases typically contain phenol, e.g. at a concentration of 40-50 mg/m³, ammonia, e.g. at a concentration of 60-150 mg/m³, and formaldehyde, e.g. at a concentration of 5-60 mg/m³.

By using a biological filter according to the invention a purification efficiency of between 50% and 99.9% can be obtained. For example, the following purification efficiencies have been obtained: a purification efficiency for phenol of higher than 95%, and a purification efficiency for ammonia of higher than 98%.

The invention also relates to a method of purifying polluted gas by means of a biological filter as described above.

The amount of water which is required by the microorganisms has to be determined for each application of the filter according to the invention. Ideally the nutrient medium should be capable of wetting the surfaces of all mineral fibers so as to form a liquid film thereon.

The invention will now be described in further detail with reference to the drawing in which
- Fig. 1: is a vertical cross-sectional view of a filter unit for use in a preferred embodiment of a gas filter according to the invention,
- Fig. 2: shows a perspective view of the filter unit according to Fig. 1, and
- Fig. 3: shows a flow diagram for a gas filtration plant comprising a gas filter according to the invention.

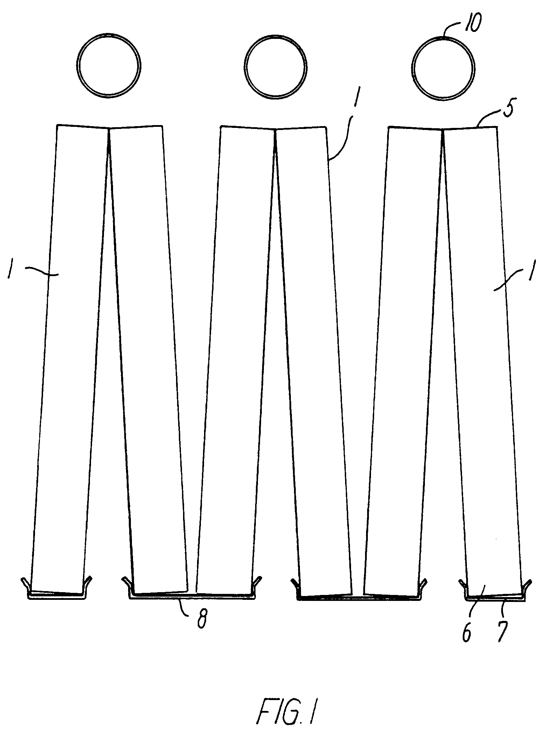

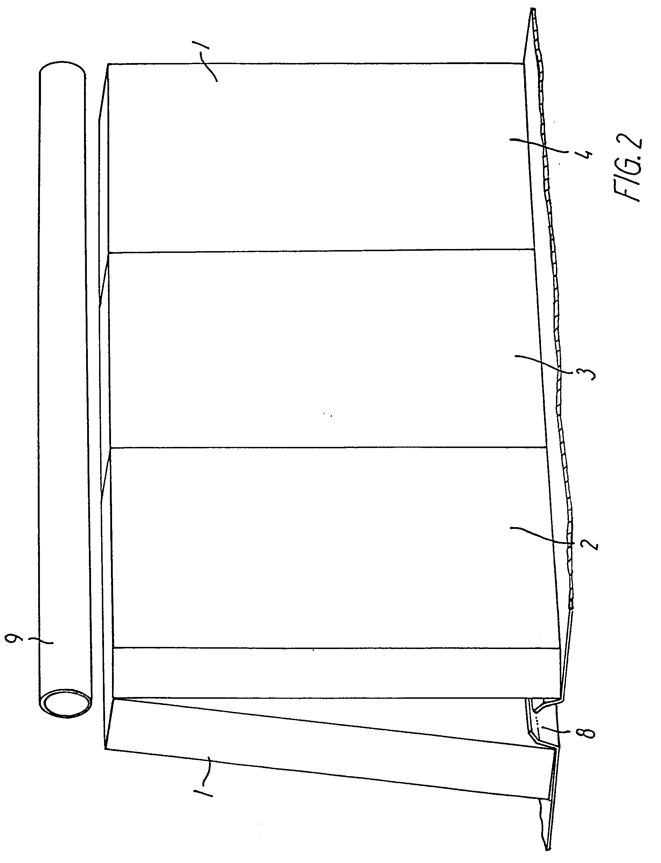

The filter unit shown in Figs. 1 and 2 consists of filter elements 1, each composed of three mineral fiber slabs 2, 3 and 4. The filter elements are in mutual contact at the upper edges 5 and the angle between adjacent elements is about 5°.

The lower edges 6 of the filter elements 1 are mounted in trays 7, 8 which serve to maintain the desired angle between the adjacent elements and to facilitate the replacement of used filter slabs with new slabs.

Pipes 9 which are closed at one end and which are connected with means (not shown) for supplying aqueous nutrient medium to a culture of microorganisms contained in the filter elements 1 are provided in the zones above the upper edges 5 of the filter elements 1. The upper sides of the pipes 9 are provided with holes 10 having such dimensions that a plurality of small sprays are formed on the upper side of the pipes 9 when nutrient medium is supplied to the pipes 9.

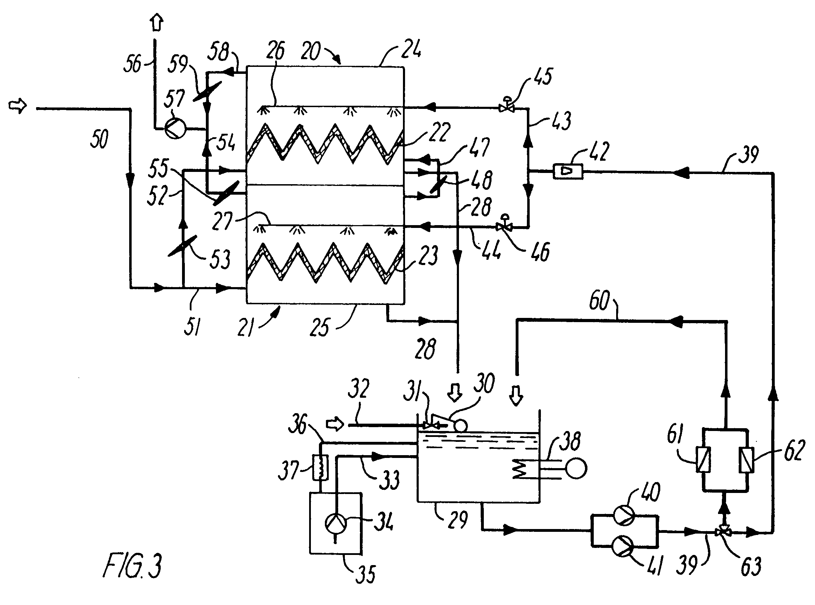

The plant illustrated in Fig. 3 comprises two gas filters 20 and 21, each consisting of a zig-zag shaped filter unit 22, 23, each filter unit consisting of a number of mineral fiber slabs containing at least one microorganism culture, and a housing 24, 25. Each gas filter further comprises conduits 26, 27 for supplying aqueous nutrient medium for the microorganism culture to the filter units 22, 23 and for distributing the liquid medium over these units. Conduits 28 connect the zone below the filter units 22, 23 in the housings 24, 25 with a collecting tank 29 for aqueous nutrient medium. The tank 29 is provided with a level sensor 30 which controls a valve 31 mounted in a conduit 32 for supplying fresh water to the tank in order to compensate for water which is evaporated or removed in another manner from the plant. A conduit 33 connects a pump 34 provided in an acid container 35 with the tank 29. The acid container 35 is also connected with the tank 29 through a conduit 36 in which there is provided a pH measuring means 37. Furthermore, the tank 29 is provided with electrical heating means 38.

A recycle conduit 39 extends from the bottom of the tank 29 and two liquid pumps 40, 41 are mounted in parallel in the conduit 39 in which there is also provided a flowmeter 42. The conduit 39 is connected with two conduits 43, 44, each comprising a valve 45, 46, the conduits 43, 44 being connected with the conduits 26, 27, respectively, for supplying aqueous nutrient medium to the filter units. The upper part of the housing 25 is connected with the lower part of the housing 24 through a gas conduit 47 in which there is provided a valve 48 so as to allow the two gas filters 20, 21 to be operated in series.

The plant also comprises a gas conduit 50 for supplying gas to be purified to the plant. The conduit 50 is partly connected with the lower part of the housing 25 through a conduit 51 and partly with the lower part of the housing 24 through a conduit 52 in which there is provided a valve 53.

A conduit 54 in which there is provided a valve 55 connects the upper part of the housing 25 with a discharge conduit 56 for purified gas and a pump 57 is provided in the latter conduit.

Similarly, a conduit 58 in which there is provided a valve 59 connects the upper part of the housing 24 with the discharge conduit 56.

The plant additionally comprises a recycle conduit 60 in which there are provided two parallel filters 61, 62, said recycle conduit 60 being connected with a valve 63 provided in the conduit 39.

The plant described is operated in the following manner:
If it is desired to purify polluted gas in both gas filters and in series the valves 53 and 55 are closed and the valves 48 and 59 are kept open. When the pump 57 is started polluted gas will be pumped through the conduit 50 and the gas thus introduced will pass through the conduit 51 into the lower part of the housing 25. The gas then passes up through the filter unit 23 countercurrently with aqueous nutrient medium which is passed from the tank 29 through the flowmeter 42, the valve 46 and the conduit 44 to the conduit 27 by means of the pump 40 or the pump 41.

After having passed through the filter unit 23 the gas flows through the conduit 47 and the valve 48 to the lower part of the housing 24 and through the filter unit 22. The flow of the gas through the filter unit 22 is countercurrent with the flow of aqueous nutrient medium which, as described above, is supplied to the conduit 43 through the conduit 39 and the flowmeter 42. After having passed through the valve 45 the nutrient medium flows into the conduit 26 which serves to distribute the nutrient medium over the filter unit 22.

Purified gas flows from the upper part of the housing 24 into the discharge conduit 56 after having passed through the conduit 58 and the open valve 59.

If it is desired to use the gas filter in parallel the valve 48 is closed and the valves 53, 55 and 59 are kept open. By closing the valves 53, 48 and 59 and by keeping the valve 55 open the upper gas filter 20 can be maintained inoperative, which may be desirable in connection with repair and/or replacement of filter elements.

If it is desired to block the lower gas filter 21, the valves 55 and 48 are closed and the valves 53 and 59 are kept open.

As mentioned above, the level sensor 30 which is coupled to the valve 31 ensures that the liquid level within the tank 29 is maintained constant. Thus, fresh water will be supplied to the tank 29 through the conduit 32 if the liquid level within the tank 29 falls.

The acidity of the aqueous nutrient medium may fluctuate and a desired activity can be maintained by means of the pump 34 which is controlled by a signal from the pH measuring means 37 provided in the conduit 36 and which is capable of pumping e.g. acid from the container 35 into the tank 29 until the desired pH value has been reestablished.

The temperature of the aqueous nutrient medium may be controlled by means of the electrical heating means 38 so that a desired temperature can be maintained in the tank 29.

If it is not desired to recycle the full amount of aqueous nutrient medium collected from the gas filters through the filter unit 22, 23 it is possible, by suitable adjusting the valve 63, to recycle a portion of the aqueous nutrient medium through the conduit 60 to the tank 29 after it has been filtered in one of the filters 61 or 62.

### Example

This example illustrates the operation of a biological filter constructed essentially as shown in fig. 3 but having only one housing (24) comprising the two filter units (22 and 23).

The filter housing (24) had the dimensions 6 m x 3 m x 2 m.

The filter units were operated in series, i.e. the outlet gas from the first (lower) filter unit (22) was used as inlet gas to the second (upper) filter unit (23).

The area of each filter unit was 75 m². Each filter unit was constructed of mineral fiber slabs of the dimensions 600 mm x 900 mm x 75 mm corresponding to a total of 132 slabs in the filter unit. The slabs were made of rock wool having a density of 43 kg/m³. The angle between adjoining slabs was approximately 6 degrees.

The microorganisms or the biomass used in the biological filter had been obtained from a process water plant, the microorganisms comprising Pseudomonas.

The filtering process was controlled by pH measurements in the collecting tank (29) and measurements of the content of phenol and mineral salts in the aqueous nutrient medium. The salt content and the phenol content was determined by sampling and subsequently lab analysis (duration 1 day).

The biological filter was operated for 10 months under the following conditions:

| GAS: | |
|---|---|
| Flow: | 12000 Nm³/h |
| Temperature before filter: | app. 30°C |
| Temperature after filter: | app. 25°C |
| Flow rate: | 0.04-0.06 m/s |

| AQUEOUS NUTRIENT MEDIUM: | |
|---|---|
| Flow: | 1500-2200 l/h/filter unit |
| pH: | 7.2 |
| pH adjusted with: | H₂SO₄/H₃PO₄ |

| POLLUTING MATERIAL: | |
|---|---|
| Maximum load: | 1.5 kg/h ammonia |
| | 1.5 kg/h phenol |
| Minimum load: | 0.6 kg/h ammonia |
| | 0.6 kg/h phenol |

| PRESSURE DROP (Δp): | |
|---|---|
| First filter unit, 0 months: | 78.4 Pa (8 mm water column) |
| Second filter unit, 0 months: | 49.0 Pa (5 mm water column) |
| First filter unit, 10 months: | 294.2 Pa (30 mm water column) |
| Second filter unit, 10 months: | 245.2 Pa (25 mm water column) |

When in operation, the load on the filter fluctuated within the range mentioned above because of fluctuations in the concentration of contaminants in the inlet gas.

The inlet gas also contained significant amounts of dust and other waste materials from mineral fibre production. It was found that the filter of the invention was operating satisfactorily even without a prefiltering unit for dust and other waste materials.

At all times during the ten months of operation, the purification efficiency for phenol was between 95% and 99%, and the purification efficiency for ammonia was at least 98%.

Furthermore, the aqueous nutrient medium sampled from the collecting tank (29) contained phenol only for very short periods of time: the maximum concentration of phenol was 30 mg/l, and after one week of recycling of the phenol containing aqueous nutrient medium, the presence of phenol was not detectable.

## Claims

1. Biological filter for purifying polluted gases comprising a housing (24, 25) containing a fibrous filter unit (22, 23) containing one or more cultures of microorganisms, means (26, 27) for supplying aqueous nutrient medium to the microorganisms contained in the fibrous filter unit, means (50-53) for supplying polluted gas to one side of the filter unit and means (54-59) for discharging purified gas from the opposite side thereof, **characterized** in that the filter unit comprises an assembly of mineral fiber slabs (2-4) supporting the culture(s) of microorganisms and mounted in a zig-zag configuration, said filter unit extending substantially perpendicular to the flow direction of the gas to be purified.

2. Filter according to claim 1, **characterized** in that the filter unit (22, 23) is placed in a horizontal plane so that the gas to be purified passes substantially vertically through the filter unit.

3. Filter according to claim 2, **characterized** in that the means for supplying aqueous nutrient medium and the means for supplying polluted gas to the filter unit are placed on the same side of the filter unit.

4. Filter according to claim 2, **characterized** in that the means (26, 27) for supplying aqueous medium and the means (50-53) for supplying polluted gas to the filter unit are placed on opposite sides of the filter unit.

5. Filter according to claim 2, **characterized** in that the means (26, 27) for supplying aqueous medium to the filter unit are placed above the filter unit (22, 23).

6. Filter according to claim 2, **characterized** in that it comprises guide members (7, 8) for maintaining the lower edges (6) of the mineral fiber slabs (2-4) in a fixed position.

7. Filter according to any of the preceding claims, **characterized** in that the mineral fiber slabs (2-4) are composed of rock wool, glass wool or slag wool.

8. Filter according to claim 7, **characterized** in that the density of the mineral fiber slabs (2-4) is between 25 and 180 kg/m³, preferably between 25 and 120 kg/m³, and more preferably between 35 and 80 kg/m³.

9. Filter according to any of the preceding claims, **characterized** in that the angle between adjoining slabs (2-4) is between 1° and 30°.

10. Filter according to any of the preceding claims, **characterized** in that it comprises means (29) for collecting aqueous nutrient medium at the bottom of the housing (24, 25) and means (39-46) for recycling the collected aqueous nutrient medium to the filter unit.

11. Filter according to any of the preceding claims, **characterized** in that the culture(s) of microorganisms has/have been obtained from a pure culture, activated sludge, contaminated soil or forest floor.

12. A method of purifying polluted gas, **characterized** in using a biological filter according to any of the preceeding claims 1-11.

## Patentansprüche

1. Biologischer Filter zur Reinigung von verunreinigten Gasen, umfassend ein Gehäuse (24, 25), das eine Einheit von Faserfiltern (22, 23) enthält, die eine oder mehrere Kulturen von Mikroorganismen enthalten, Einrichtungen (26, 27) zur Zuführung von wässrigem Nährmedium zu den in der Faserfiltereinheit enthaltenen Mikroorganismen, Einrichtungen (50-53) zur Zuführung von verunreinigtem Gas zu einer Seite der Filtereinheit und Einrichtungen (54-59) zum Abführen von gereinigtem Gas aus der gegenüberliegenden Seite hiervon, dadurch gekennzeichnet, daß die Filtereinheit einen Zusammenbau von Mineralfasermatten (2-4) umfaßt, welche die Kultur(en) von Mikroorganismen tragen und in einer Zickzack-Konfiguration angeordnet sind, wobei sich diese Filtereinheit im wesentlichen senkrecht zur Strömungsrichtung des zu reinigenden Gases erstreckt.

2. Filter nach Anspruch 1, dadurch gekennzeichnet, daß die Filtereinheit (22, 23) in einer waagerechten Ebene derart angeordnet ist, daß das zu reinigende Gas im wesentlichen senkrecht durch die Filtereinheit durchtritt.

3. Filter nach Anspruch 2, dadurch gekennzeichnet, daß die Einrichtung zur Zuführung wässrigen Nährmediums und die Einrichtung zur Zuführung von verunreinigtem Gas zu der Filtereinheit auf derselben Seite der Filtereinheit angeordnet sind.

4. Filter nach Anspruch 2, dadurch gekennzeichnet, daß die Einrichtungen (26, 27) zur Zuführung wässrigen Nährmediums und die Einrichtung (50-53) zur Zuführung von verunreinigtem Gas zu der Filtereinheit auf gegenüberliegenden Seiten der Filtereinheit angeordnet sind.

5. Filter nach Anspruch 2, dadurch gekennzeichnet, daß die Einrichtungen (26, 27) zur Zuführung wässrigen Nährmediums zu der Filtereinheit oberhalb der Filtereinheit (22, 23) angeordnet sind.

6. Filter nach Anspruch 2, dadurch gekennzeichnet, daß es Führungsteile (7, 8) zum Halten der unteren Kanten (6) der Mineralfasermatten (2-4) in einer fixierten Stellung umfaßt.

7. Filter nach einem der vorhergehenden Ansprüche, dadurch gekennzeichnet, daß die Mineralfasermatten (2-4) aus Steinwolle, Glaswolle oder Schlackenwolle bestehen.

8. Filter nach Anspruch 7, dadurch gekennzeichnet, daß die Dichte der Mineralfasermatten (2-4) zwischen 25 und 180 kg/m³, bevorzugt zwischen 25 und 120 kg/m³ und mehr bevorzugt zwischen 35 und 80 kg/m³ liegt.

9. Filter nach einem der vorhergehenden Ansprüche, dadurch gekennzeichnet, daß der Winkel zwischen aneinandergrenzenden Matten (2-4) zwischen 1° und 30° liegt.

10. Filter nach einem der vorhergehenden Ansprüche, dadurch gekennzeichnet, daß er Einrichtungen (29) zum Auffangen von wässrigem Nährmedium am Unterteil des Gehäuses (24, 25) und Einrichtungen (39-46) zur Rückführung des gesammelten wässrigen Nährmediums zu der Filtereinheit umfaßt.

11. Filter nach einem der vorhergehenden Ansprüche, dadurch gekennzeichnet, daß die Kultur(en) von Mikroorganismen aus einer Reinkultur, Belebtschlamm, kontaminierter Erde oder Walderde erhalten worden ist/sind.

12. Verfahren zum Reinigen von verunreinigtem Gas, gekennzeichnet durch die Verwendung eines biologischen Filters nach einem der vorhergehenden Ansprüche 1 - 11.

## Revendications

1. Filtre biologique pour la purification de gaz pollués comprenant un corps (24, 25) contenant une unité de filtre fibreux (22, 23) contenant une ou plusieurs cultures de microorganismes, des moyens (26, 27) pour fournir un milieu nutritif aqueux aux microorganismes contenus dans l'unité de filtre fibreux, des moyens (50-53) pour amener le gaz pollué vers une extrémité de l'unité de filtration, ainsi que des moyens (54-59) pour évacuer le gaz purifié à partir de l'extrémité opposée de cette unité, **caractérisé en ce que** l'unité de filtration comprend un assemblage de plaques de fibres minérales (2-4) supportant la ou les culture(s) de microorganismes et montées selon une configuration dite en 〈〈 zig-zag 〉〉, ladite unité de filtration se présentant selon une direction sensiblement perpendiculaire à la direction d'écoulement du gaz à purifier.

2. Filtre selon la revendication 1, **caractérisé en ce que** l'unité de filtration (22, 23) est placée dans un plan horizontal, de telle façon que le gaz à purifier traverse l'unité de filtration selon une direction sensiblement verticale.

3. Filtre selon la revendication 2, **caractérisé en ce que** les moyens pour fournir le milieu nutritif aqueux ainsi que les moyens pour amener le gaz pollué à l'unité de filtration sont placés du même côté de l'unité de filtration.

4. Filtre selon la revendication 2, **caractérisé en ce que** les moyens (26, 27) pour fournir le milieu aqueux ainsi que les moyens (50-53) pour amener le gaz pollué à l'unité de filtration sont placés sur des côtés opposés de l'unité de filtration.

5. Filtre selon la revendication 2, **caractérisé en ce que** les moyens (26, 27) pour fournir le milieu aqueux à l'unité de filtration sont placés au-dessus de l'unité de filtration (22, 23).

6. Filtre selon la revendication 2, **caractérisé en ce qu**'il comprend des éléments de guidage (7, 8) destinés à maintenir dans une position fixe les bords inférieurs (6) des plaques de fibres minérales (2-4).

7. Filtre selon l'une quelconque des revendications précédentes, **caractérisé en ce que** les plaques (2-4) de fibres minérales sont composées de laine de roche, de laine de verre ou de 〈〈 poil de scorie 〉〉.

8. Filtre selon la revendication 7, **caractérisé en ce que** la densité des plaques de fibres minérales (2-4) se situe entre 25 et 180 kg/m³, de préférence entre 25 et 120 kg/m³, et de manière encore préférée entre 35 et 80 kg/m³.

9. Filtre selon l'une quelconque des revendications précédentes, **caractérisé en ce que** l'angle existant entre des plaques adjacentes (2-4) est compris entre 1° et 30°.

10. Filtre selon l'une quelconque des revendications précédentes, **caractérisé en ce qu**'il comprend des moyens (29) pour récupérer le milieu nutritif aqueux à l'extrémité inférieure du corps (24, 25) ainsi que des moyens (39-46) pour recycler le milieu nutritif aqueux ainsi récupéré vers l'unité de filtration.

11. Filtre selon l'une quelconque des revendications précédentes, **caractérisé en ce que** la ou les culture(s) de microorganismes a/ont été obtenue(s) à partir d'une culture pure, d'une boue activée, d'un sol contaminé ou d'un tapis forestier.

12. Procédé pour purifier un gaz pollué, **caractérisé en ce qu**'il utilise un filtre biologique selon l'une quelconque des revendications précédentes 1-11.
